# EUROPÄISCHE PATENTANMELDUNG

(11) **EP 4 609 991 A1**
(43) Veröffentlichungstag der Anmeldung: **03.09.2025**
(21) Anmeldenummer: 25160674.5
(22) Anmeldetag: 27.02.2025
(51) Int. Cl.: B25B 7/08, B25B 7/02, B25B 7/00, B23B 29/00, E04G 21/12, B23D 29/00

(54) **HANDGEFÜHRTES WERKZEUG UND VERFAHREN ZU SEINER HERSTELLUNG**

(30) Priorität: 01.03.2024 AT 501792024
(71) Anmelder: Ing. Johann Hörtnagl - Werkzeuge GmbH, 6166 Fulpmes (AT)
(72) Erfinder: HÖRTNAGL, Johann, 6166 Fulpmes (AT)
(74) Vertreter: Torggler & Hofmann Patentanwälte - Innsbruck

(57) **Zusammenfassung**

Handgeführtes Werkzeug, umfassend:
- zwei Griffelemente (3, 4), welche jeweils einteilig mit einem Backenelement (5, 6) ausgebildet sind, und
- ein Gelenk (7), welches Gelenk (7) die zwei Griffelemente (3, 4) zueinander verschwenkbar um eine Rotationsachse (8) verbindet,
wobei ein Spalt zwischen den zwei Backenelementen (5, 6) durch ein Verschwenken der Griffelemente (3, 4) zueinander veränderbar ist oder die Backenelemente (5, 6) durch die Verschwenkung aneinander anlegbar sind, wobei die zwei Griffelemente (3, 4) mitsamt der jeweiligen Backenelemente (5, 6) aus einer Aluminiumlegierung hergestellt sind.

## Beschreibung

Die vorliegende Erfindung betrifft ein handgeführtes Werkzeug mit den Merkmalen des Oberbegriffs des Anspruchs 1, sowie ein Verfahren zum Herstellen eines handgeführten Werkzeugs.

Gattungsgemäße handgeführte Werkzeuge umfassen:
- zwei Griffelemente, welche jeweils einteilig mit einem Backenelement ausgebildet sind, und
- ein Gelenk, welches Gelenk die zwei Griffelemente zueinander verschwenkbar um eine Rotationsachse verbindet,
wobei ein Spalt zwischen den zwei Backenelementen durch ein Verschwenken der Griffelemente zueinander veränderbar ist oder die Backenelemente durch die Verschwenkung aneinander anlegbar sind.

Im Folgenden soll der Stand der Technik anhand einiger spezifischer handgeführter Werkzeuge umrissen werden. Dies gilt allgemein für handgeführte Werkzeuge.

Vor allem bei der Berufsausübung eines Dachdeckers und eines Spenglers gehört eine Blechschere als auch eine Falzzange zur Grundausstattung, welche im tagtäglich Berufsalltag von entsprechenden Personen stets mitgeführt.

Zumeist wird eine Blechschere oder eine Falzzange sogar von einem Dachdecker oder Spengler an seinem Werkzeuggürtel geführt oder in einem Werkzeugkasten griffbereit gehalten, da Anpassungsarbeiten an Dächern stets durch die Blechschere durchzuführen sind oder die Endmontage von Blechelementen am Dach durch eine Falzzange durchzuführen ist.

So ist zu erkennen, dass diese Werkzeuge einer hohen Anforderung an ihre Funktion ausgeliefert sind, womit es aus dem Stand der Technik bekannt ist, entsprechende Werkzeuge auch aus entsprechenden Werkstoffen auszubilden, um ihre Funktion sicherzustellen.

So werden Blechscheren und Falzzangen zumeist aus Stahlwerkstoffen gefertigt.

Dies hat jedoch den Nachteil, dass entsprechende Falzzangen und Blechscheren ein gewisses Gewicht aufweisen, welches der Dachdecker und/oder Spengler beim Ausführen ihres Berufes täglich zu tragen haben.

Dieses erhöhte Gewicht stellt dem Dachdecker und/oder Spengler nicht nur vor die Herausforderung der körperlichen Fitness, sondern bildet auch ein gewisses Gefahrenpotential für einen Dachdecker oder Spengler.

Da der Dachdecker oder Spengler bei seiner Berufsausübung zumeist auf Dächern oder ähnlichen Gebilden oft ausgesetzt seine Arbeit ausführen muss, stellen Werkzeuge mit hohen Gewichten eine zusätzliche Gefahrenquelle dar, da diese Werkzeuge die Bewegungsfreiheit des Dachdeckers oder Spenglers einschränken oder dessen Gleichgewicht vor eine Herausforderung stellen.

Eine ähnliche Problematik ergibt sich auch am Bau und dem Beruf des Eisenbinders, welcher nahezu den ganzen Tag mit einer Eisenflechtzange und/oder einer Schneidzange hantiert. Aufgabe der vorliegenden Erfindung ist es daher, ein handgeführtes Werkzeug bereitzustellen, durch welche die zuvor genannten Nachteile des Standes der Technik zumindest teilweise verbessert werden können und/oder mit denen eine Bedienerfreundlichkeit erhöht werden kann und/oder deren Handhabung erleichtert werden kann.

Diese Aufgabe wird erfindungsgemäß durch ein handgeführtes Werkzeug mit den Merkmalen des Anspruchs 1 sowie mit einem Verfahren zur Herstellung eines handgeführten Werkzeugs mit den Merkmalen des Anspruchs 11 gelöst.

Erfindungsgemäß ist es vorgesehen, dass handgeführtes Werkzeug folgendes umfasst:
- zwei Griffelemente, welche jeweils einteilig mit einem Backenelement ausgebildet sind und
- ein Gelenk, welches Gelenk die zwei Griffelemente zueinander schwenkbar um eine Rotationsachse bildet,
wobei ein Spalt zwischen den zwei Backenelementen durch ein Verschwenken der Griffelemente zueinander veränderbar ist oder die Backenelemente durch die Verschwenkung aneinander anlegbar sind, wobei die zwei Griffelemente mitsamt der jeweiligen Backenelemente aus einer Aluminiumlegierung hergestellt sind.

Durch die vorliegende Erfindung wird eine wesentliche Gewichtsreduktion eines handgeführten Werkzeugs ermöglicht, was sich natürlich direkt auf die Handhabung auswirkt, da durch das verringerte Gewicht bei einer ganztätigen Nutzung des Werkzeugs wesentlich Energie eingespart werden kann.

Des Weiteren wird auch eine Bewegung und/oder Arbeiten an exponierten Orten (beispielweise Dächern) durch die verringerte Gewichtskraft des Werkzeugs nicht wesentlich beeinträchtigt.

Überraschenderweise haben Versuche der Anmelderin gezeigt, dass handgeführte Werkzeuge aus Aluminiumlegierungen dennoch den hohen Anforderungen und Belastungen im Einsatz genügen.

Unter Aluminiumlegierungen werden Legierungen verstanden, die einen Anteil von mindestens 50 %, bevorzugt wenigstens 75 % und besonders bevorzugt wenigstens 80 %, an Aluminium haben.

Diese %-Angaben können als Volumenprozent oder Gewichtsprozent verstanden werden.

Vorteilhafte Ausführungsformen der Erfindung sind in den abhängigen Ansprüchen definiert.

Vorzugsweise ist es vorgesehen, dass die Aluminiumlegierung durch den Werkstoff EN AW-7075 ausgebildet ist. Dieser Werkstoff wird je nach Werkstoffbezeichnungssystem auch als DIN 3.4365 oder EN AW-AL ZN5,5NgCu bezeichnet.

Es kann vorgesehen sein, dass das Gelenk mittels einem Gelenksbolzen ausgebildet ist, welcher Gelenksbolzen die zwei Griffelemente über entsprechende Öffnungen in den Griffelementen miteinander verbindet.

Vorzugsweise kann vorgesehen sein, dass der Gelenksbolzen aus demselben Werkstoff, wie die Griffelemente, gefertigt ist.

Es kann vorgesehen sein, dass an einem jeden Backenelement der Blechschere, vorzugsweise durch Schweißen, besonders bevorzugt durch Laserschweißen, ein Scherenblatt angeordnet ist.

Vorzugsweise kann vorgesehen sein, dass die Scherenblätter aus einem Schnellarbeitsstahl hergestellt sind.

Es kann vorgesehen sein, dass der Schnellarbeitsstahl durch den Werkstoff HS-6-5-2 C ausgeführt ist. Je nach Werkstoffbezeichnungssystem kann dieser Werkstoff auch als Z 85 WDCV 6 oder X 82 WNoV 6 5 oder M 2 reg. C bezeichnet werden.

Vorzugweise kann vorgesehen sein, dass das handgeführte Werkzeug als Falzzange, Blechschere, Eisenflechtzange und/oder Schneidzange ausgebildet ist.

Es kann vorgesehen sein, dass die zwei Griffelemente durch ein Schmiedeverfahren, vorzugsweise Gesenkschmieden, hergestellt sind.

Vorzugsweise kann vorgesehen sein, dass die Griffelemente einer Wärmebehandlung, vorzugweise einem Ausscheidungsglühen und/oder Warmauslagern, unterzogen sind.

Es kann vorgesehen sein, dass die zwei Griffelemente jeweils einstückig mit dem jeweiligen Backenelement ausgebildet sind.

Im Sinne des vorliegenden Dokumentes ist "einstückig" so zu verstehen, dass eine Komponente aus einem einzigen Stück hergestellt wird oder wurde, welches einzige Stück aus einem fertigungstechnischen Urformprozess (beispielweise einem Gießprozess) entspringt.

Nach der Herstellung durch einen fertigungstechnischen Urformprozess kann vorgesehen sein, dass die einstückige Komponente weiterverarbeitet wird (wie beispielsweise durch ein Gesenkschmiedeverfahren).

Des Weiteren wird Schutz begehrt für ein Verfahren zum Herstellen eines handgeführten Werkzeugs, insbesondere eines erfindungsgemäßen handgeführten Werkzeugs, umfassend die Verfahrensschritte:
- Schmieden, vorzugsweise Gesenkschmieden wenigstens zweier Griffelemente, welche jeweils einteilig mit einem Backenelement ausgebildet sind aus einer Aluminiumlegierung, und
- Schwenkbares Verbinden der zwei Griffelemente zueinander um eine Rotationsachse mittels eines Gelenks.

Vorzugsweise kann vorgesehen sein, dass die Griffelemente nach dem Schmieden einer Wärmebehandlung, besonders bevorzugt einem Ausscheidungsglühen und/oder Warmauslagern, unterzogen werden.

Es kann vorgesehen sein, dass vor dem schwenkbar Verbinden der Griffelemente an den Backenelementen der Griffelemente ein Scherenblatt aus einem Schnellarbeitsstahl angebracht, vorzugsweise angeschweißt, wird.

Vorzugsweise kann vorgesehen sein, dass das Scherenblatt durch ein Laserschweißverfahren, besonders bevorzugt ohne Zusatzmaterial und/oder in einer Schutzgasatmosphäre, angeschweißt wird.

Es kann dabei vorgesehen sein, dass die Schutzgasatmosphäre durch ein Edelgas oder ein Inertgas, insbesondere Argon, umgesetzt wird.

Es kann vorgesehen sein, dass das Laserschweißverfahren in einem Wasserbad und/oder unter Wasser vorgenommen wird.

Vorzugsweise kann vorgesehen sein, dass zum Verschweißen des Scherenblatts mit dem Backenelement die Parameter eines Laserschweißverfahrens, vorzugsweise die Frequenz und/oder die Fokussierung, dermaßen abgestimmt werden, dass durch den Laserstrahl ein Aufschmelzen des Scherenblatts im Bereich der Kontaktstelle mit dem Backenelement erreicht wird, wodurch sich durch Wärmeleitung und Wärmestrahlung ein Aufschmelzen des Backenelementes an der Kontaktstelle und somit ein Verschweißen des Backenelementes mit dem Scherenblatt ergibt.

Weitere Vorteile und Einzelheiten der Erfindung ergeben sich aus den Figuren sowie der dazugehörigen Figurenbeschreibung. Dabei zeigt
- Fig. 1 - 4: eine erste Ausführungsvariante einer Falzzange,
- Fig. 5 - 10: unterschiedliche Ausführungsvarianten von Blechscheren, und
- Fig. 11: eine Ausführungsform einer Eisenflechtzange.

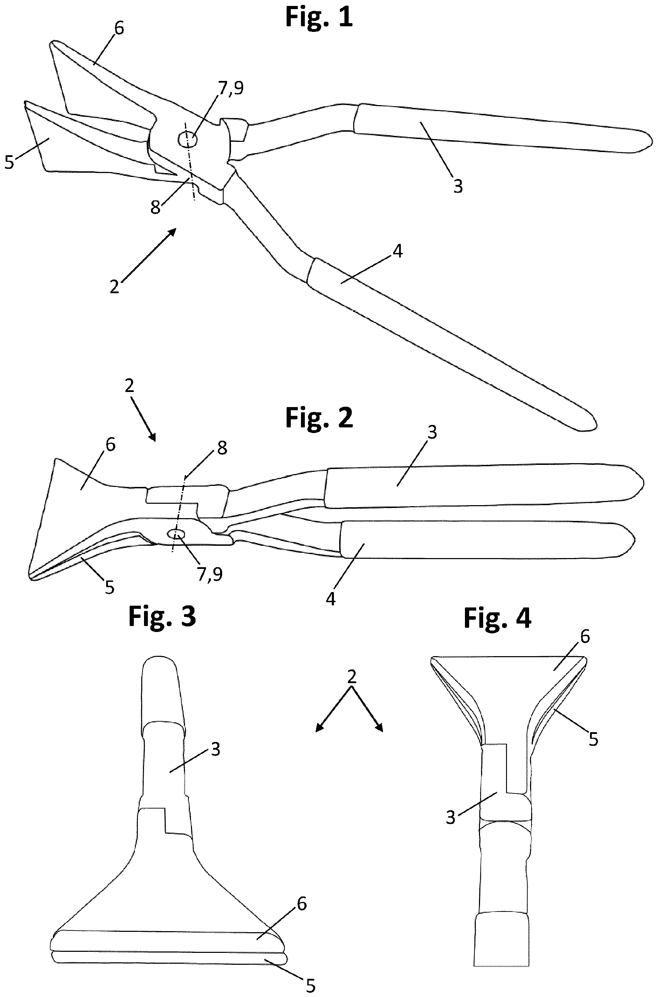

Die Figuren 1 bis 4 zeigen unterschiedliche Ansichten einer ersten Ausführungsvariante einer Falzzange 2. Diese Falzzange 2 umfasst zwei Griffelemente 3, 4.

Die Griffelemente 3, 4 sind einstückig mit dem Backenelementen 5, 6 umgesetzt.

Genau genommen ist dabei das erste Griffelement 3 einteilig mit dem ersten Backenelement 5 umgesetzt und das zweite Griffelement 4 einteilig mit dem zweiten Backenelement 6.

Die zwei Griffelemente 3, 4 sind über das Gelenk 7 schwenkbar um die Rotationsachse 8 verbunden.

Das Gelenk 7 wird in diesem Ausführungsbeispiel als Gelenksbolzen 9 umgesetzt, welcher Gelenksbolzen 9 die Griffelemente 3, 4 entlang der Rotationsachse 9 durchsetzt und miteinander verbindet.

Durch eine Verschwenkung der Griffelemente 3, 4 zueinander ist ein Spalt zwischen den Backenelementen 5, 6 veränderbar bzw. die Backenelemente 5, 6 aneinander anlegbar.

Gemäß einem erfindungsgemäßen Ausführungsbeispiel sind dabei die Griffelemente 3, 4 und die damit einstückig ausgebildeten Backenelemente 5, 6 aus einer Aluminiumlegierung ausgebildet, wobei diese Bauteile dieses Ausführungsbeispiels durch ein Gesenkschmiedeverfahren hergestellt wurden.

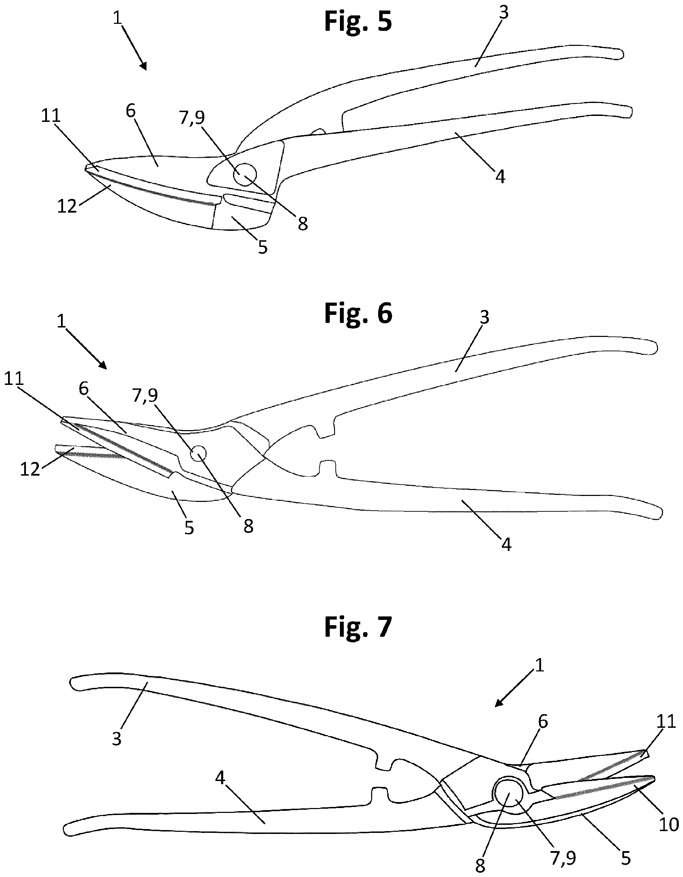

Die Figuren 5 bis 10 zeigen unterschiedliche Ausführungsvarianten von Blechscheren 1. Diese Blechscheren 1 unterscheiden sich in einzelnen Details und Designvarianten.

Die Figuren 5 bis 8 zeigen dabei jeweils Frontalansichten der Blechscheren 1. Es ist zu erkennen, dass die Blechscheren 1 allesamt ein erstes Griffelement 3 und ein zweites Griffelement 4 aufweisen. Das erste Griffelement 3 ist dabei einstückig mit einem ersten Backenelement 5 umgesetzt und das zweite Griffelement 4 einstückig mit einem zweiten Backenelement 6.

Die Griffelemente 3, 4 sind zueinander verschwenkbar um eine Rotationsachse 8 durch das Gelenk 7 verbunden. Das Gelenk 7 dieser Ausführungsbeispiele ist wiederum durch einen Gelenksbolzen 9 umgesetzt.

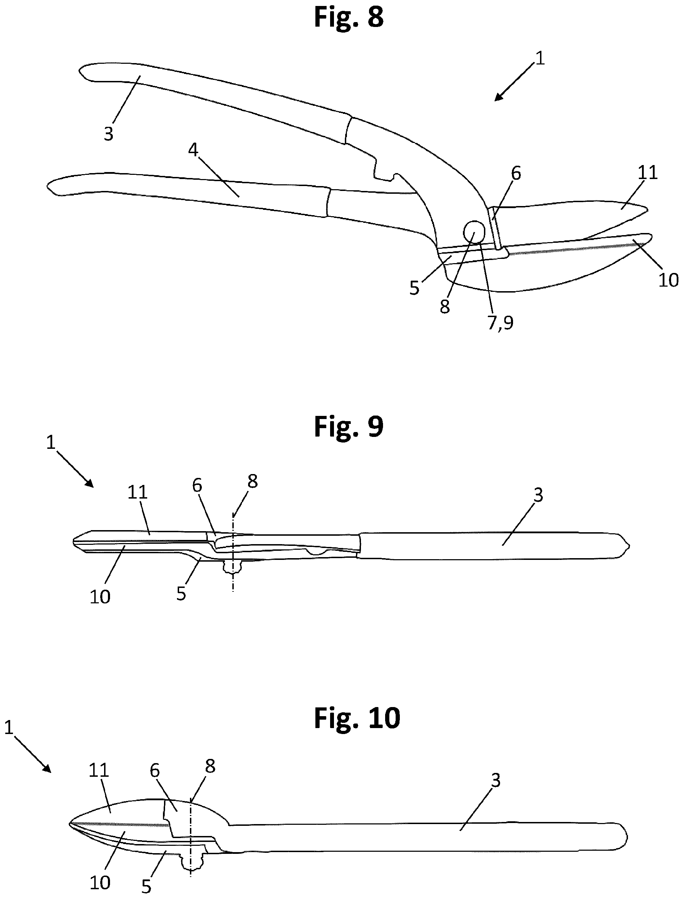

Die Figuren 9 und 10 zeigen eine Draufsicht auf zwei unterschiedliche Ausführungsformen einer Blechschere 1, wobei unterschiedliche Bauweisen, Dicken und somit Stabilitäten von Blechscheren 1 gezeigt sind.

Die Ausführungsformen der Figuren 5 bis 10 sind gemäß Ausführungsbeispielen der Erfindung dermaßen ausgebildet, dass die Griffelemente 3, 4 und somit die einteilig damit ausgebildeten Backenelemente 5, 6 aus einer Aluminiumlegierung umgesetzt sind.

Um die Schneiden bzw. die Klingen der Schere stabiler und verschleißfester umzusetzen, sind Scherenblätter 10, 11 umgesetzt, welche aus einem Schnellarbeitsstahl gefertigt sind.

Diese Scherenblätter 10, 11 sind an den Backenelementen 4, 5 der Blechscheren 1 angeordnet, genau genommen: durch ein Laserschweißverfahren mit diesen verbunden.

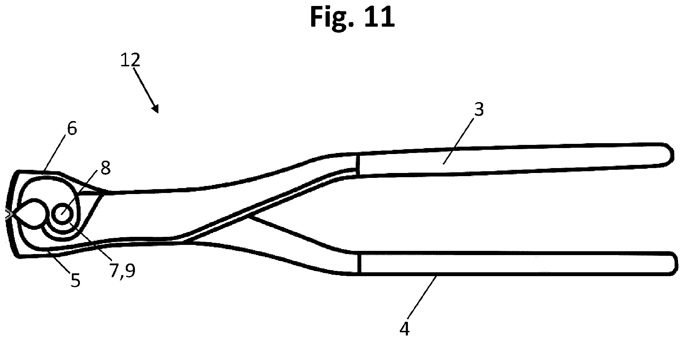

Die Fig. 11 zeigt ein Ausführungsbeispiel einer Eisenflechtzange 12.

Diese Eisenflechtzange 12 umfasst wiederrum zwei Griffelemente 3, 4. Die Griffelemente 3, 4 sind einstückig mit dem Backenelementen 5, 6 umgesetzt.

Die zwei Griffelemente 3, 4 sind über das Gelenk 7 schwenkbar um die Rotationsachse 8 verbunden.

Das Gelenk 7 ist auch in diesem Ausführungsbeispiel als Gelenksbolzen 9 umgesetzt, welcher Gelenksbolzen 9 die Griffelemente 3, 4 entlang der Rotationsachse 9 durchsetzt und miteinander verbindet.

Gemäß einem erfindungsgemäßen Ausführungsbeispiel sind dabei die Griffelemente 3, 4 und die damit einstückig ausgebildeten Backenelemente 5, 6 aus einer Aluminiumlegierung ausgebildet, wobei diese Bauteile dieses Ausführungsbeispiels durch ein Gesenkschmiedeverfahren hergestellt wurden.

### Bezugszeichenliste:

- 1: Blechschere
- 2: Falzzange
- 3: erstes Griffelement
- 4: zweites Griffelement
- 5: erstes Backenelement
- 6: zweites Backenelement
- 7: Gelenk
- 8: Rotationsachse
- 9: Gelenksbolzen
- 10: erstes Scherenblatt
- 11: zweites Scherenblatt
- 12: Eisenflechtzange
- 13: Schneidzange

## Patentansprüche

1. Handgeführtes Werkzeug, umfassend:
- zwei Griffelemente (3, 4), welche jeweils einteilig mit einem Backenelement (5, 6) ausgebildet sind, und
- ein Gelenk (7), welches Gelenk (7) die zwei Griffelemente (3, 4) zueinander verschwenkbar um eine Rotationsachse (8) verbindet,
wobei ein Spalt zwischen den zwei Backenelementen (5, 6) durch ein Verschwenken der Griffelemente (3, 4) zueinander veränderbar ist oder die Backenelemente (5, 6) durch die Verschwenkung aneinander anlegbar sind, **dadurch gekennzeichnet, dass** die zwei Griffelemente (3, 4) mitsamt der jeweiligen Backenelemente (5, 6) aus einer Aluminiumlegierung hergestellt sind.

2. Werkzeug nach Anspruch 1, wobei die Aluminiumlegierung der Werkstoff EN AW-7075 ist.

3. Werkzeug nach einem der vorhergehenden Ansprüche, wobei das Gelenk (7) mittels einem Gelenksbolzen (9) ausgebildet ist, welcher Gelenksbolzen (9) die zwei Griffelemente (3, 4) über entsprechende Öffnungen in den Griffelementen (3, 4) miteinander verbindet.

4. Werkzeug nach Anspruch 3, wobei der Gelenksbolzen (9) aus demselben Werkstoff wie die Griffelemente (3, 4) gefertigt ist.

5. Werkzeug nach wenigstens einem der vorhergehenden Ansprüche, wobei an einem jeden Backenelement (5, 6), vorzugsweise durch Schweißen, besonders bevorzugt durch Laserschweißen, ein Scherenblatt (10, 11) angeordnet ist.

6. Werkzeug nach Anspruch 5, wobei die Scherenblätter (10, 11) aus einem Schnellarbeitsstahl hergestellt sind.

7. Werkzeug nach Anspruch 5 oder 6, wobei der Schnellarbeitsstahl der Werkstoff HS-6-5-2 C ist.

8. Werkzeug nach wenigstens einem der vorhergehenden Ansprüche, wobei die zwei Griffelemente (3, 4) durch ein Schmiedeverfahren, vorzugsweise Gesenkschmieden, hergestellt sind.

9. Werkzeug nach wenigstens einem der vorhergehenden Ansprüche, wobei die zwei Griffelemente (3, 4) jeweils einstückig mit dem jeweiligen Backenelement (5, 6) ausgebildet sind.

10. Werkzeug nach wenigstens einem der vorhergehenden Ansprüche, wobei das Werkzeug eine Falzzange (2) oder eine Blechschere (1) ist.

11. Verfahren zum Herstellen eines handgeführten Werkzeugs, insbesondere eines handgeführten Werkzeugs nach wenigstens einem der vorhergehenden Ansprüche, umfassen die Verfahrensschritte:
- Schmieden, vorzugsweise Gesenkschmieden, wenigstens zweier Griffelemente (3, 4), welche jeweils einteilig mit einem Backenelement (5, 6) ausgebildet sind, aus einer Aluminiumlegierung, und
- Schwenkbares Verbinden der zwei Griffelemente (3, 4) zueinander um eine Rotationsachse (8) mittels eines Gelenks (7).

12. Verfahren zum Herstellen eines Werkzeugs nach Anspruch 11, wobei die Griffelemente (3, 4) nach dem Schmieden einer Wärmebehandlung, vorzugweise einem Ausscheidungsglühen und/oder Warmauslagern, unterzogen werden.

13. Verfahren zum Herstellen eines Werkzeugs nach Anspruch 11 oder 12, wobei vor dem schwenkbaren Verbinden der an den Backenelementen (5, 6) der Griffelemente (3, 4) ein Scherenblatt (10, 11) aus einem Schnellarbeitsstahl angebracht, vorzugsweise angeschweißt, wird.

14. Verfahren zum Herstellen eines Werkzeugs nach Anspruch 13, wobei das Scherenblatt durch ein Laserschweißverfahren, vorzugsweise ohne Zusatzmaterial und/oder in Schutzgasatmosphäre, angeschweißt wird.

15. Verfahren zum Herstellen eines Werkzeugs nach Anspruch 14, wobei zum Verschweißen des Scherenblatts (10, 11) mit dem Backenelement (5, 6) die Parameter des Laserschweißverfahren, vorzugsweise die Frequenz und/oder die Fokussierung, dermaßen abgestimmt werden, dass durch den Laserstrahl ein Aufschmelzen des Scherenblatts (10, 11) im Bereich der Kontaktstelle mit dem Backenelement (5, 6) erreicht wird, wodurch sich durch Wärmeleitung und Wärmestrahlung ein Aufschmelzen des Backenelements (5, 6) an der Kontaktstelle und somit ein Verschweißen des Backenelements (5, 6) mit dem Scherenblatt ergibt (10, 11).
